# EUROPEAN PATENT SPECIFICATION

(11) **EP 2 164 802 B1**
(45) Date of publication and mention of the grant of the patent: **18.07.2012**
(21) Application number: 08763875.5
(22) Date of filing: 22.05.2008
(51) Int. Cl.: B65D 81/00, C01B 17/02, B65D 85/84

(54) **PROCESS FOR PACKAGING SULPHUR FOR SAFE TRANSPORTATION AND STORAGE REALISED THROUGH COVERING IT WITH A LAYER OF WATERPROOF MATERIAL**
VERFAHREN ZUR VERPACKUNG VON SCHWEFEL ZUR SICHEREN BEFÖRDERUNG UND AUFBEWAHRUNG DURCH ABDECKUNG DESSELBEN MIT EINER SCHICHT AUS WASSERDICHTEM MATERIAL
PROCEDE DE CONDITIONNEMENT DU SOUFRE EFFECTUE PAR RECOUVREMENT DE CELUI-CI PAR UNE COUCHE DE MATERIAU IMPERMEABLE À L'EAU POUR UN TRANSPORT ET UN STOCKAGE SANS DANGER

(30) Priority: 20.06.2007 IT RM20070342
(43) Date of publication of application: 24.03.2010
(73) Proprietor: Ciancaglioni, Isabella, 00189 Roma (IT)
(72) Inventor: Ciancaglioni, Isabella, 00189 Roma (IT)
(74) Representative: Santi, Filippo
(86) International application number: PCT/IT2008/000340
(87) International publication number: WO 2008/155790

(56) References cited:
- DE-C- 932 605
- GB-A- 453 981

## Description

The invention concerns a process for packaging, cooling and solidification of sulphur according to the preamble of claim 1.

At present, elemental sulphur, almost completely produced in liquid form during the production of fuels, is conveyed from the place of production to the place of utilisation substantially in two forms: as a liquid, in special containers suitable for containing the liquid at a temperature which is higher than that of solidification (at about 115°C), or as a solid, in pieces of different shapes such as tablets, plates, granules, shattered blocks, etc. While the transportation of liquid sulphur is obtained by means of closed containers that prevent sulphur from coming in contact with the environment, the transportation of solid sulphur involves environmental and safety risks when it is performed in loose form. For economical reasons most sulphur is conveyed in a loose solid form, while transport in liquid form is generally used only for short distances. Risks of conveying solid sulphur in loose form are mainly due to the production of sulphur powders constituting a safety problem, since sulphur powder can burn or even explode, but also a sanitary problem for the personnel that can come in contact with it or breath it. Besides safety and sanitary problems, the transportation of loose solid sulphur also involves environmental risks related to the acidification of waters and soil due to production of sulphuric acid as a result of the oxidation of sulphur by the oxygen in the air. This phenomenon, mainly due to biological oxidation by specific bacteria, quickly brings the pH of the water coming in contact with elemental sulphur down to very acidic values, thus causing environmental problems that can affect surface waters, water table waters and soils. Specifically for these reasons the law in many countries forbids or restricts the transportation of solid sulphur in shattered blocks, the form that produces the greatest amount of powder. Finally, the contact with elemental sulphur can involve corrosion of ferrous materials, this phenomenon exposes containers used to contain solid sulphur, often made of steel, to the risk of a fast decay. The problems connected to the transportation and storage of loose elemental sulphur could be easily solved by packaging sulphur in pieces in closed containers. However, this solution is expensive and generally is not adopted because it makes the price of sulphur packaged in this way less competitive with respect to international quotations. Each year, millions of tons of sulphur are conveyed in loose form throughout the world.

After many investigations and experimentations the applicant proved that by solidification of liquid sulphur in containers made of waterproof material it is possible to obtain cheap solid sulphur in pieces covered by a waterproof layer suitable for insulating sulphur from the outside, thus preventing the dispersion of sulphur powders and preventing the contact with water. In this way, any sanitary and environmental hazard is actually extremely reduced and the safety of transportation and storage of sulphur is increased.

DE 932605 discloses a process according to the preamble of claim 1.

It is therefore an object of the present invention to provide a process for packaging sulphur in solid forms enveloped in waterproof material, by means of solidification of liquid sulphur in containers made of waterproof material. According to a distinctive feature of the invention, said containers are made of or contain or are covered by waterproof materials suitable to contain liquid sulphur at temperatures higher than the melting temperature of sulphur (about 115°C) and in particular at the temperature of liquid sulphur at the outlet of production plants (130-150 °C) and, after solidification, to protect sulphur during transportation and storage.

The container inside which liquid sulphur is solidified, in case it is not made substantially only of waterproof material, can be made of composite or layered materials only partially containing waterproof materials. The waterproof material can be selected preferably amongst polymeric plastic materials such as: polyacetals, polyamides, polybuthylenterephthalate, polycarbonate, polyphenyloxide, polyphenylsulphide, polyisobuthylene, polyvinylidenchloride, polymethylmethacrylate, polyvinylidenfluoride, polysulphone, expanded polystyrene, terpolymer acrylonitrile-styrene-acrylic ester, polyvinylacetates, terpolymer methylmethacrylate-buthadiene-styrene, polyurethanes, co-polymer styrene acrylonitrile, ethylenvinylacetate. More preferably the waterproof material can be selected amongst the materials typically used for low-cost containers such as polyethylene, polypropylene, polyvinylchloride, polystyrene, polyethylenterephthalate, cellulose acetate.

The container inside which sulphur is solidified can have any shape or size; more preferably, it can have a parallelepipedal or spherical shape with volumes comprised between some cubic centimetres up to tens of litres. The thickness of the walls of the container can be comprised between a few thousands of millimetres up to some millimetres. More preferably it can be comprised between 0.005 and 0.5 millimetres. The possible softening of the walls of the container in contact with hot liquid sulphur during the filling, can be advantageously used in order to increase the volume of the container by feeding liquid with a suitable overpressure. In order to obtain solidification of sulphur after it was poured inside the container, the latter must be cooled down to temperatures lower than the solidification temperature of sulphur (about 115°C). In order to cool the waterproof container after it was filled in with liquid sulphur it is preferable to adopt forced cooling system allowing for a fast solidification of sulphur. In order to cool down rapidly the waterproof container filled with liquid sulphur it is possible to contact it with a cool fluid, more preferably the container can be cooled by immersing it in cold water or putting it in contact with a flow of cold water. For economical reasons and in order to obtain a faster solidification it is preferable to use containers having very thin walls such as for example envelops or sacks made of waterproof materials in form of sheets or film. In case thermoplastic materials having thin thickness are used for the container, the temperature of liquid sulphur can involve an excessive softening of the material putting the container under risk of breakage before the cooling of liquid sulphur. In this case it is preferable to confine the container of thermoplastic material inside a support structure, assuring the preservation of the desired shape for all the time needed to solidify at least the more external layer of sulphur, so to remove the risk that the container can break, leading to sulphur spills or, take an undesired shape. In case the container of thermoplastic material is in turn contained in a support structure that can assure the preservation of the desired shape during solidification, the possible softening of the thermoplastic material at the temperature of liquid sulphur, caused during the filling, can be advantageously used in order to make the thermoplastic container expand until it completely fills the support structure thus obtaining a block of solid sulphur having the shape of the support structure and being enclosed in a layer of thermoplastic material. In case the waterproof container is in turn contained in a support structure that can assure the preservation of the desired shape during solidification of the sulphur external layer, the liquid sulphur solidification process can also continue outside the support structure. In this way the structure can be used to support a new container.

The process, in case the waterproof container is constituted by an envelope or sack of thermoplastic film, can comprise the following steps:
1. Manufacturing a container, having the shape of an envelope or sack provided with an opening, by welding together pieces of sheet or film of thermoplastic material.
2. Placing the container in a support structure having a desired shape.
3. Pouring liquid sulphur inside the container until it is completely filled.
4. Closing the thermoplastic container by welding.
5. Cooling the container with cold water to cause the solidification of the first layer of sulphur in contact with the container.
6. Taking away the container that contains liquid sulphur only partially solidified from the support structure.
7. Completing solidification of the liquid sulphur contained in the container.

The process described hereinabove can be efficiently operated also by executing the steps 4,5,6 in a different chronological order from that indicated. By way of example, the closure of the container can follow the step of solidification and cooling, or the container can be removed after complete solidification and cooling of sulphur. All the previous steps can be performed by apparatuses operated both manually and automatically or semi-automatically.

Some examples will be provided in the following representing some embodiments of the present invention, and are not to be considered as a limitation thereof.

### Example 1

A polyethylene film having a thickness of 25 thousands of millimetres is used to realise by thermal welding a square shaped envelope with a volume of about 100 cubic centimetres provided with an inlet conduit. The envelope is sustained by suitable supports with the opening positioned upwards. Liquid sulphur at a temperature of 135°C is poured inside the envelope by the inlet conduit. After complete filling of the container the conduit is closed by welding. The container full of liquid sulphur is then immersed in a basin that contains cold water until the complete solidification and cooling of sulphur.

### Example 2

The same polyethylene film of example 1 is used to realise by welding a disc shaped envelope with a diameter of 5 cm provided with an inlet conduit.

The envelope is placed inside a sphere shaped support structure formed by two matching metallic hemispheres with an internal diameter of 5 cm. The envelope thus occupies the median plane of the sphere corresponding to the maximum circle of the two matching hemispheres. The inlet conduit of the envelope exits from the supporting spherical structure through an appropriate opening. Liquid sulphur at a temperature of 135°C is poured inside the envelope through the inlet conduit.

The liquid is inserted with an appropriate overpressure so to expand the walls of the envelope until it completely fills the spherical confinement structure. Once the filling is complete the conduit is closed by welding at the inlet point of the envelope. The confinement structure that contains the container with liquid sulphur is then immersed in a basin of cold water until the complete solidification and cooling of sulphur. After cooling the support structure is taken away thus leaving free the sphere of sulphur enveloped in the polyethylene film.

### Example 3

A polyvinylchloride (PVC) film having thickness of two tenths of millimetre is used to realise by welding a watertight sack with a volume of 25 litres provided with an opening at the top. The sack is then placed, the opening facing upwards, in a support structure suitable to sustain it in a vertical position and keep it in that position during filling with liquid sulphur. Liquid sulphur at a temperature of 135°C is then poured into the sack until it is full. After filling the opening is closed by thermal welding. The liquid sulphur containing supported sack is then immersed in cold water until complete solidification and cooling of sulphur. After cooling the support structure is taken away by leaving free the sack full of sulphur.

### Example 4

A polyethylene film with thickness of 15 thousands of millimetre is welded so to form a disc shaped envelope having a diameter of 4 cm and provided with an inlet conduit. 33 cubic centimetres of liquid sulphur at a temperature of 135°C are then introduced inside the envelope through the conduit. The inlet conduit is then closed by welding near to the point of inlet in the envelop. The liquid sulphur containing envelope is then immersed in a basin of cold water until solidification and cooling.

## Claims

1. Process for packaging, cooling and solidification aimed at the transportation and storage of solid sulphur in pieces **characterised in that** said pieces are covered by a layer of waterproof material by means of the insertion of the liquid sulphur to be packaged in waterproof containers having at least a layer of polymeric plastic material and subsequent cooling and solidification.

2. Process according to claim 1 wherein the waterproof container is constituted entirely or partially by polymeric plastic material preferably selected amongst: polyacetals, polyamides, polybuthylenterephthalate, polycarbonate, polyphenyloxide, polyphenylsulphide, polyisobuthylene, polyvinylidenchloride, polymethylmethacrylate, polyvinylidenfluoride, polysulphone, expanded polystyrene, terpolymer acrylonitrile-styrene-acrylic ester, polyvinylacetates, terpolymer methylmethacrylate-buthadiene-styrene, polyurethanes, co-polymer styrene acrylonitrile, ethylenvinylacetate.

3. Process according to claim 1 wherein the waterproof container is made of a thermoplastic material preferably selected amongst low cost polymers such as: polyethylene, polypropylene, polyvinylchloride, polystyrene, cellulose acetate.

4. Process according to claim 1 wherein the waterproof container is realised by welding of films or sheets of a thermoplastic material.

5. Process according to claim 4 wherein said thermoplastic material is in the form of a thin film having thickness comprised between 0.005 and 0.5 mm.

6. Process according to claim 1 wherein said container is constituted by layers of different materials at least one of which is made of waterproof material.

7. Process according to claim 1 wherein the packaging of sulphur for transportation or storage comprises the following steps:
- Manufacturing a container of waterproof material,
- Placing the container in an appropriate support structure suitable for sustaining the container during filling,
- Filling the container with liquid sulphur,
- Closing the container,
- Cooling the container by contacting it with air or cold water until solidification and cooling of sulphur.

8. Process according to claim 7 wherein the steps are performed by automatic or semi-automatic apparatuses.

## Patentansprüche

1. Verfahren zur Verpackung, Kühlung und Verfestigung, welches den Transport und die Lagerung von festem Schwefel in Stücken zum Ziel hat, **dadurch gekennzeichnet, dass** die Stücke mit einer Schicht von wasserdichtem Material bedeckt werden durch die Einbringung des zu verpackenden flüssigen Schwefels in wasserdichte Behälter mit mindestens einer Schicht eines polymeren Kunststoffmaterials und anschließende Kühlung und Verfestigung.

2. Verfahren nach Anspruch 1, wobei der wasserdichte Behälter vollständig oder teilweise aus polymerem Kunststoffmaterial, vorzugsweise ausgewählt aus Polyacetalen, Polyamiden, Polybutylenterephthalat, Polycarbonat, Polyphenyloxid, Polyphenylsulfid, Polyisobutylen, Polyvinylidenchlorid, Polymethylmethacrylat, Polyvinylidenfluorid, Polysulfon, expandiertem Polystyrol, Terpolymer Acrylnitril-Styrol-Acrylsäureester, Polyvinylacetaten, Terpolymer Methylmethacrylat-Butadien-Styrol, Polyurethanen, Copolymer Styrol-Acrylnitril, Ethylenvinylacetat, aufgebaut ist.

3. Verfahren nach Anspruch 1, wobei der wasserdichte Behälter aus einem thermoplastischen Material hergestellt ist, das vorzugsweise aus kostengünstigen Polymeren wie Polyethylen, Polypropylen, Polyvinylchlorid, Polystyrol, Celluloseacetat ausgewählt ist.

4. Verfahren nach Anspruch 1, wobei der wasserdichte Behälter durch Verschweißen von Filmen oder Folien eines thermoplastischen Materials realisiert wird.

5. Verfahren nach Anspruch 4, wobei das thermoplastische Material in Form eines Dünnfilms mit einer Dicke zwischen 0,005 und 0,5 mm vorliegt.

6. Verfahren nach Anspruch 1, wobei der Behälter aus Schichten von unterschiedlichen Materialien, von denen mindestens eines aus wasserdichtem Material besteht, aufgebaut ist.

7. Verfahren nach Anspruch 1, wobei die Verpackung des Schwefels für den Transport oder die Lagerung die folgenden Schritte umfasst:
- Herstellen eines Behälters aus wasserdichtem Material,
- Platzieren des Behälters in eine geeignete Trägerstruktur, welche geeignet ist, den Behälter während des Befüllens zu halten,
- Befüllen des Behälters mit flüssigem Schwefel,
- Schließen des Behälters,
- Kühlen des Behälters durch Kontaktieren mit Luft oder kaltem Wasser bis zur Verfestigung und Abkühlung von Schwefel.

8. Verfahren nach Anspruch 7, wobei die Schritte durch automatische oder halbautomatische Vorrichtungen durchgeführt werden.

## Revendications

1. Procédé de conditionnement, de refroidissement et de solidification, destiné au transport et au stockage de soufre solide dans des pièces, **caractérisé en ce que** lesdites pièces sont couvertes d'une couche de matériau étanche à l'eau, au moyen de l'insertion du soufre liquide à conditionner dans des conteneurs étanches à l'eau ayant au moins une couche de matériau plastique polymère, puis par le refroidissement et la solidification.

2. Procédé selon la revendication 1, dans lequel le conteneur étanche à l'eau est constitué en tout ou partie de matériau plastique polymère sélectionné de préférence parmi les suivants : polyacétals, polyamides, téréphtalate de polybutylène, polycarbonate, oxyde de polyphényle, sulfure de polyphényle, polyisobutylène, chlorure de polyvinylidène, méthacrylate de polyméthyle, fluorure de polyvinylidène, polysulfone, polystyrène expansé, terpolymère d'acrylonitrile-styrène-ester acrylique, polyvinylacétates, terpolymère de méthacrylate de méthyle-butadiène-styrène, polyuréthanes, copolymère de styrène-acrylonitrile, copolymère d'acétate de vinyle-éthylène.

3. Procédé selon la revendication 1, dans lequel le conteneur étanche à l'eau est fait d'un matériau thermoplastique de préférence sélectionné parmi des polymères à faible coût tels que les suivants :
polyéthylène, polypropylène, polychlorure de vinyle, polystyrène, acétate de cellulose.

4. Procédé selon la revendication 1, dans lequel le conteneur étanche à l'eau est réalisé en soudant des films ou des feuilles d'un matériau thermoplastique.

5. Procédé selon la revendication 4, dans lequel ledit matériau thermoplastique se présente sous la forme d'un film mince présentant une épaisseur comprise entre 0,005 et 0,5 mm.

6. Procédé selon la revendication 1, dans lequel ledit conteneur est constitué par des couches de différents matériaux dont au moins une est faite d'un matériau étanche à l'eau.

7. Procédé selon la revendication 1, dans lequel le conditionnement du soufre à des fins de transport ou de stockage comprend les étapes suivantes :
- fabrication d'un conteneur constitué de matériau étanche à l'eau,
- placement du conteneur dans une structure de support appropriée, adaptée pour soutenir le conteneur lors du remplissage,
- remplissage du conteneur avec du soufre liquide,
- fermeture du conteneur,
- refroidissement du conteneur par mise en contact de celui-ci avec de l'air ou de l'eau froide jusqu'à solidification et refroidissement du soufre.

8. Procédé selon la revendication 7, dans lequel les étapes sont effectuées par des appareils automatiques ou semi-automatiques.
